# EUROPÄISCHE PATENTSCHRIFT

(11) **EP 3 497 328 B1**
(45) Veröffentlichungstag und Bekanntmachung des Hinweises auf die Patenterteilung: **18.11.2020**
(21) Anmeldenummer: 17748744.4
(22) Anmeldetag: 03.08.2017
(51) Int. Cl.: F04B 5/00, F04B 5/02, F04B 43/02

(54) **VORRICHTUNG ZUM ERZEUGEN EINES PULSIERENDEN HYDRAULIKFLUIDDRUCKES**
DEVICE FOR GENERATING A PULSATING HYDRAULIC FLUID PRESSURE
DISPOSITIF POUR PRODUIRE UNE PRESSION DE FLUIDE HYDRAULIQUE PULSATOIRE

(30) Priorität: 08.08.2016 DE 102016114680
(43) Veröffentlichungstag der Anmeldung: 19.06.2019
(73) Patentinhaber: ProMinent GmbH, 69123 Heidelberg (DE)
(72) Erfinder: REINHARD, Martin, 69123 Heidelberg (DE); MALTRY, Jörg, 69226 Nußloch (DE)
(74) Vertreter: WSL Patentanwälte Partnerschaft mbB
(86) Internationale Anmeldenummer: PCT/EP2017/069671
(87) Internationale Veröffentlichungsnummer: WO 2018/029078

(56) Entgegenhaltungen:
- WO-A1-2011/082021
- DE-A1-102006 061 462
- DE-A1-102012 207 181
- US-A- 4 383 504

## Beschreibung

Die vorliegende Erfindung betrifft eine Vorrichtung zum Erzeugen eines pulsierenden Hydraulikfluiddruckes in einer mit Hydraulikfluid gefüllten Arbeitskammer. Insbesondere betrifft die vorliegende Erfindung eine hydraulisch angetriebene Dosiermembranpumpe mit einer solchen Vorrichtung.

Typischerweise weisen Dosiermembranpumpen eine Dosierkopf mit einer Dosierkammer auf, deren Volumen durch die Bewegung einer Membran abwechselnd vergrößert und verkleinert werden kann, um einen entsprechenden Pumpvorgang zu initiieren.

Die Bewegung der Membran kann beispielsweise durch Beaufschlagen der der Dosierkammer abgewandten Seite der Membran mit einem pulsierenden Hydraulikfluiddruck erfolgen. Der mit Hydraulikfluiddruck gefüllte Hohlraum der Dosiermembranpumpe wird auch als Arbeitskammer bezeichnet. Die Membran trennt somit die mit Hydraulikfluid gefüllte Arbeitskammer von der mit Förderfluid gefüllten Dosierkammer.

Um den pulsierenden Hydraulikfluiddruck innerhalb der Arbeitskammer zu erzeugen, wird häufig ein Arbeitskolben, der innerhalb eines Arbeitshohlzylinders beweglich geführt ist, angetrieben. Dabei steht der Arbeitskolben in Fluidkommunikation mit der Arbeitskammer, so dass durch die Bewegung des Arbeitskolbens das Volumen in der Arbeitskammer und damit der Hydraulikfluiddruck vergrößert und verkleinert werden kann. Aufgrund der geringen Kompressibilität des Hydraulikfluids ist die Änderung des Volumens der Arbeitskammer jedoch gering. Allerdings bewirkt der Anstieg des Hydraulikfluiddrucks, dass der erhöhte Druck über die Membran auf das in der Dosierkammer befindliche Förderfluid übertragen wird, was wiederum zu einer Bewegung der Membran führt.

Bei den beschriebenen Dosiermembranpumpen ist die Dosierkammer im Allgemeinen über ein Rückschlagventil mit einer Saugleitung und mit einem weiteren Rückschlagventil, dem sogenannten Druckventil, mit einer Druckleitung verbunden. Wird die Membran in Saugrichtung bewegt, so dass sich das Volumen der Dosierkammer vergrößert, so öffnet das Saugventil und Förderfluid kann über die Saugleitung in die Dosierkammer gesaugt werden. Wird die Bewegung der Membran umgekehrt, so dass sie in Druckrichtung bewegt wird, steigt der Förderfluiddruck in der Dosierkammer an, so dass zunächst das Saugventil schließt. Der Druck in der Dosierkammer steigt weiter an, bis der Druck in der Dosierkammer den Druck in der Druckleitung übersteigt, so dass das Druckventil öffnet und Förderfluid aus der Dosierkammer in die Druckleitung gefördert werden kann.

Die Dosiermembranpumpen fördern Förderfluid nur während der Druckphase, d.h. während sich die Membran in Druckrichtung bewegt, und während das Druckventil geöffnet ist. Solange sich die Membran in Saugrichtung bewegt, so dass Förderfluid von der Saugleitung in die Förderkammer gesaugt wird, und während der Druckanstiegsphase bevor das Druckventil öffnet, findet hingegen keine Förderung von Förderfluid statt.

Es ist deswegen wünschenswert, diejenigen Phasen der Membranbewegung, in denen keine Förderung stattfindet, möglichst schnell zu durchlaufen.

Es ist daher bekannt, die Membrangeschwindigkeit bzw. die Geschwindigkeit des die Membran antreibenden Arbeitskolbens während dieser Phasen zu erhöhen.

Der entsprechenden Antriebssteuerung sind jedoch Grenzen gesetzt.

Aus der WO 2011/082021 A1 ist beispielsweise eine Dosierpumpe bekannt, welche aus einer ersten und zweiten Kammer, sowie einem jeweils in der ersten bzw. zweiten Kammer angeordneten Kolben besteht. Dabei sind die erste und die zweite Kammer über eine Leitung derart miteinander verbunden, dass, wenn der Kolben in der ersten Kammer das Volumen der ersten Kammer vergrößert, Fluid von der zweiten Kammer durch eine mit der Bewegung des ersten Kolbens gekoppelte Bewegung des zweiten Kolbens in die erste Kammer über die Leitung geführt wird. Vergrößert der erste Kolben das Volumen der ersten Kammer, so blockieren die Rückschlagventile einen Rückfluss aus der ersten Kammer in die zweite Kammer.

Aus der DE 10 2006 061 462 A1 ist zudem ein elektrohydraulisches Pumpensystem bekannt, bei welchem wenigstens einem Hydraulikkreis eine Pumpe mit mehreren Fördervorrichtungen zugeordnet ist, wobei Druckanschlüsse der Fördervorrichtungen eines Hydraulikreises derart hydraulisch miteinander verbunden sind, dass die Förderströme mehrerer Fördervorrichtungen summarisch dem Verbraucher zugeleitet werden und dass zusätzliche Mittel vorgesehen sind, um die Summierung der Förderströme der Fördervorrichtungen zumindest temporär zu unterbinden. Zu diesem Zweck wird in der DE 10 2006 061 462 A1 vorgeschlagen, wenigstens einen Kanalabschnitt mit einem zusätzlichen Ventil vorzusehen, um einen Teilförderström aus einem Verdrängerraum in einen Nachlaufraum 22 umzuleiten.

Insbesondere bei der Bewegung der Membran in Druckrichtung ist die Phase zwischen dem Schließen des Saugventils und dem Öffnen des Druckventils unerwünscht. Neben der vor allem bei hohen Drücken zum trage kommenden Kompressibiltät des Förder- und Hydraulikfluids existieren im System eine Reihe von Elastizitäten, nicht zuletzt bedingt auch durch die Verdichtung der Membran, so dass die Zeitdauer, bis in der Förderkammer der gewünschte Druck ausgebildet ist, erheblich sein kann.

Das Problem verschärft sich bei Hochdruckpumpen, die möglichst exakt geringe Dosiermengen fördern sollen. Um beispielsweise gegen einen Druck in der Druckleitung von 400 bar zu fördern, wird in der Regel ein Arbeitskolben mit kleiner effektiver Arbeitsfläche gewählt, um die Anforderungen an den Kolbenantrieb gering zu halten. Ein Arbeitskolben mit solch einem kleinen Arbeitsquerschnitt ist zwar gut geeignet, um geringe Dosiermengen exakt zu fördern, kann jedoch unter Umständen nicht schnell genug den Druck im Förderraum aufbauen. Insbesondere bei der Verwendung von sehr kleinen effektiven Arbeitsflächen des Arbeitskolbens ist zudem der notwendige Hub, den der Arbeitskolben durchlaufen muss, um überhaupt in der Förderkammer den gewünschten Druck aufbauen zu können, relativ groß, was weitere Anforderungen an den Platzbedarf und den entsprechenden Antrieb stellt.

Ausgehend von dem beschriebenen Stand der Technik ist es daher Aufgabe der vorliegenden Erfindung, eine Vorrichtung zum Erzeugen eines pulsierenden Hydraulikfluiddruckes und insbesondere eine Dosiermembranpumpe mit solch einer Vorrichtung bereitzustellen, die geringe Abmessungen hat und zudem ein schnelles Durchlaufen der Phase zwischen Schließen des Saugventils und Öffnen des Druckventiles, der sogenannten Druckaufbauphase, erlaubt.

Erfindungsgemäß wird diese Aufgabe dadurch gelöst, dass ein Hilfskolben in einem Hilfshohlzylinder beweglich geführt ist und mit einer Zusatzkammer in Fluidkommunikation steht, wobei ein verschließbarer Hilfskanal vorgesehen ist, welcher die Zusatzkammer und die Arbeitskammer verbindet, wobei Hilfskolben und Hilfshohlzylinder derart ausgebildet und angeordnet sind, dass durch Bewegen des Hilfskolbens innerhalb des Hilfshohlzylinders Hydraulikfluid zumindest zum Teil aus der Zusatzkammer in den Hilfskanal und von dem Hilfskanal in die Arbeitskammer gedrückt werden kann, wobei der Hilfskolben die Zusatzkammer in einen vorderen und einen hinteren Zusatzkammerabschnitt unterteilt, wobei der Hilfskolben derart bewegt werden kann, dass Hydraulikfluid von dem vorderen Zusatzkammerabschnitt in den Hilfskanal und von dem Hilfskanal in die Arbeitskammer gedrückt werden kann, und der Hilfskolben und der Hilfshohlzylinder derart ausgebildet sind, dass der Hilfskolben während der Bewegung einen ersten und einen zweiten Hubabschnitt durchläuft, wobei nur in dem ersten Hubabschnitt Hydraulikfluid von der Zusatzkammer in den Hilfskanal und von dem Hilfskanal in die Arbeitskammer übertragen werden kann, sodass insbesondere zu Beginn eines Druckhubes zusätzliches Hydraulikfluid von der Zusatzkammer (3) in die Arbeitskammer (1) gebracht wird.

Durch das Vorsehen einer mit Hydraulikfluid befüllten Hilfskammer und eines Hilfskolben, mit dem insbesondere zu Beginn des Druckhubes, d.h. während der Druckaufbauphase, zusätzliches Hydraulikfluid in die Arbeitskammer gebracht wird, so dass die Druckerhöhung des Hydraulikfluids nicht nur durch die Bewegung des Arbeitskolbens, sondern auch durch die Zuführung von zusätzlichem Arbeitsfluid verursacht wird, lässt sich die Phase ohne Förderung effektiv reduzieren.

Dabei sind die beiden Kolben sowie die Arbeits- und die Zusatzkammer vorzugsweise derart ausgebildet, dass eine Zuführung von Arbeitsfluid von dem Hilfskanal in die Arbeitskammer nur während der Druckaufbauphase, d.h. zu Beginn der Druckbewegung des Arbeitskolbens solange das Ventil zur Druckleitung noch geschlossen ist.

In einer bevorzugten Ausführungsform weist die Vorrichtung einen Stufenkolben auf, welcher sowohl den Arbeitskolben als auch den Hilfskolben umfasst. Dabei ist der Stufenkolben innerhalb eines Stufenhohlzylinders beweglich angeordnet, welcher sowohl den Arbeitshohlzylinder als auch den Hilfshohlzylinder umfasst.

Es ist somit möglich, mit einem Antrieb den Stufenkolben anzutreiben und dabei sowohl den Arbeitskolben in dem Arbeitshohlzylinder als auch den Hilfskolben im Hilfshohlzylinder zu bewegen.

Arbeits- und Hilfskolben können dann zwar nicht mehr getrennt voneinander bewegt werden, dies ist jedoch auch gar nicht notwendig.

In einer weiteren bevorzugten Ausführungsform ist vorgesehen, dass die wirksame Arbeitsfläche des Hilfskolbens, die mit der Hilfskammer in Fluidkombination steht, größer, vorzugsweise mehr als 100% größer, als die wirksame Arbeitsfläche des Arbeitskolbens, die mit der Arbeitskammer in Fluidkommunikation steht, ist.

Unter der wirksamen Arbeitsfläche wird die mit Hydraulikfluid in Kontakt stehende Fläche verstanden, die bei einer Bewegung des Kolbens eine Kraft auf das Fluid ausübt.

Im Falle des Arbeitskolbens entspricht die wirksame Arbeitsfläche des Arbeitskolbens in der Regel der kreisförmigen Stirnfläche des Arbeitskolbens. Ist jedoch die Vorrichtung mit einem Stufenkolben ausgestattet, der sowohl Hilfskolben als auch Arbeitskolben umfasst, ist der Hilfskolben in axialer Richtung hinter dem Arbeitskolben angeordnet und hat einen Durchmesser, der größer ist als der Arbeitskolbendurchmesser. Da jedoch der Arbeitskolben am Hilfskolben befestigt ist, ist die wirksame Arbeitsfläche des Hilfskolbens in der Regel ringförmig.

In einer weiteren bevorzugten Ausführungsform ist vorgesehen, dass der effektive Hub des Hilfskolbens kleiner, vorzugsweise um mehr als 50 % kleiner als der effektive Hub des Arbeitskolbens ist.

Dabei wird unter dem effektiven Hub die Länge der Bewegung des Kolbens verstanden, während der der Kolben Kraft auf das Förderfluid ausübt.

Diese Maßnahme trägt der Erkenntnis Rechnung, dass die Unterstützung des Hilfskolbens lediglich während der sogenannten Druckaufbauphase, d.h. während einer Phase, in der noch gar keine Förderung von Förderfluid erfolgt, benötigt wird. Sobald genügend Fluid in die Arbeitskammer eingebracht worden ist, kann die eigentliche Förderung der Dosiermembranpumpe allein durch die Bewegung des Arbeitskolbens erfolgen.

Erfindungsgemäß unterteilt der Hilfskolben die Zusatzkammer in einen vorderen und einen hinteren Zusatzkammerabschnitt, wobei der Hilfskolben derart bewegt werden kann, dass Hydraulikfluid von dem vorderen Zusatzkammerabschnitt in den Hilfskanal und von dem Hilfskanal in die Arbeitskammer gedrückt werden kann, wobei der Hilfskolben und der Hilfshohlzylinder derart ausgebildet sind, dass der Hilfskolben während der Bewegung einen ersten und einen zweiten Hubabschnitt durchläuft, wobei nur in dem ersten Hubabschnitt Hydraulikfluid von der Zusatzkammer in den Hilfskanal und von dem Hilfskanal in die Arbeitskammer übertragen werden kann. Mit anderen Worten sind Maßnahmen vorgesehen, die in dem zweiten Hubabschnitt eine Übertragung von Hydraulikfluid durch den Hilfskolben verhindert. In diesem Fall ist der erste Hubabschnitt als der effektive Hub des Hilfskolbens anzusehen.

So ist es beispielsweise möglich, dass im zweiten Hubabschnitt der vordere und der hintere Zusatzkammerabschnitt verbunden sind. Dies könnte beispielsweise dadurch erfolgen, dass der Hilfshohlzylinder einen Abschnitt mit kleinerem Innendurchmesser, der in etwa dem Außendurchmesser des Hilfskolbens entspricht, und einen Abschnitt mit größerem Innendurchmesser aufweist. Solange sich der Hilfskolben in dem Abschnitt mit kleinerem Innendurchmesser befindet, kann der Hilfskolben Hydraulikfluid von der Zusatzkammer in den Hilfskanal und von dem Hilfskanal in die Arbeitskammer übertragen. Sobald jedoch der Hilfskolben in den Abschnitt des Hilfshohlzylinders mit größerem Innendurchmesser eintritt, kann das Hydraulikfluid den Hilfskolben umfangsseitig umströmen, wodurch ein weiterer Transport von Hydraulikfluid durch den Hilfskolben von der Zusatzkammer in den Hilfskanal und von dem Hilfskanal in die Arbeitskammer unterbleibt.

Alternativ dazu kann die Zusatzkammer über ein volumetrisches Dosierventil im Hilfskanal mit der Arbeitskammer verbunden sein, so dass das von dem Hilfskolben aus der Zusatzkammer gedrückte Hydraulikfluid das volumetrische Dosierventil betätigt, wobei vorzugsweise das Dosiervolumen des volumetrischen Ventils dem Produkt aus dem effektiven Hub des Hilfskolbens und der effektiven Arbeitsfläche des Hilfskolbens entspricht.

Volumetrische Dosierventile, manchmal auch Zumessventile genannt, sind bekannt und werden häufig zur volumetrischen Abgabe von Schmier- oder Kraftstoffen verwendet. Im vorliegenden Fall werden sie jedoch zur Abgabe einer kontrollierten Menge an Hydraulikfluid verwendet. Die volumetrischen Ventile weisen ein Dosiervolumen auf, das sich mit Hydraulikfluid füllt. Wird das volumetrische Ventil mit Hilfe des Hydraulikfluids, das der Hilfskolben aus der Zusatzkammer drückt, betätigt, so wird exakt das gewünschte Dosiervolumen in die Arbeitskammer abgegeben. Eventuell zusätzliches Hydraulikfluid, das von der Hilfskammer in den Hilfskanal gedrückt wird, kann nicht in die Arbeitskammer gelangen, sondern wird beispielsweise in einen entsprechenden Vorratstank umgelenkt. Dadurch ist sichergestellt, dass mit Hilfe des Hilfskolbens lediglich eine bestimmte Menge an Hydraulikfluid in die Arbeitskammer gebracht wird, um die Arbeitskammer möglichst schnell zu befüllen. Die weitere Bewegung des Förderfluids und die damit verbundenen Dosierung wird dann ausschließlich mit Hilfe des Arbeitskolbens in der bekannten Art und Weise bewirkt.

In einer weiteren bevorzugten Ausführungsform ist vorgesehen, dass ein Rückströmkanal zwischen Arbeitskammer und Zusatzkammer vorgesehen ist, in dem ein Rückschlagventil angeordnet ist, welches eine Fluidströmung nur in Richtung von der Zusatzkammer in den Rückströmkanal und/oder von dem Rückströmkanal in die Arbeitskammer zulässt.

Dadurch wird verhindert, dass das in die Arbeitskammer transportierte Förderfluid wieder zurück in die Zusatzkammer strömt.

Allerdings ist es am Ende des Druckhubes notwendig, das zusätzlich in die Arbeitskammer gebrachte Hydraulikfluid wieder aus der Arbeitskammer zu entfernen. Daher ist in einer bevorzugten Ausführungsform eine Betätigungsvorrichtung zum Entsperren des Rückschlagventils vorgesehen. Das Rückschlagventil kann daher beispielsweise während des Saughubes entsperrt werden, um einen Druckausgleich zwischen Arbeitskammer und Zusatzkammer und damit ein gezieltes Rückströmen des Hydraulikfluids aus der Arbeitskammer in die Zusatzkammer zu erreichen.

Die Betätigungsvorrichtung kann beispielsweise von dem Hilfskolben betätigt werden. Wenn die Betätigungsvorrichtung ein mechanisches Element, wie zum Beispiel ein entsprechender Hebel, ist, so kann der Hilfskolben in einer seiner Endpositionen den Hebel betätigen und das Rückschlagventil öffnen.

In einer besonders bevorzugten Ausführungsform wird der Rückströmkanal von dem Hilfskanal gebildet. Alternativ kann Rückströmkanal und Hilfskanal jedoch auch separat ausgebildet sein. In letzterem Fall ist es dann von Vorteil, wenn das Rückschlagventil des Rückströmkanals federbelastet ist, d.h. nur dann öffnet wenn der Druckunterschied zwischen Arbeitskammer und Hilfskammer so groß ist, dass die Federkraft überwunden wird. Dabei kann die Federkraft so hoch gewählt werden, dass im normalen Betrieb der notwendige Druckunterschied gar nicht erreicht wird. Das Rückschlagventil öffnet daher nur, wenn es beispielsweise durch den Hilfskolben entsperrt wird oder wenn aus irgendwelchen Gründen der Hilfskanal verstopft ist, so dass der Fluiddruck in der Hilfskammer zu stark ansteigt.

In einer weiteren bevorzugten Ausführungsform ist ein verschließbarer Verbindungskanal zwischen vorderem Zusatzkammerabschnitt und entweder einem Hydraulikfluidtank oder dem hinteren Zusatzkammerabschnitt vorhanden, wobei der Verbindungskanal vorzugsweise über ein Rückschlagventil verschlossen ist, welches eine Fluidströmung nur in Richtung von dem Tank oder von dem hinteren Zusatzkammerabschnitt in den vorderen Zusatzkammerabschnitt zulässt. Über diesen Verbindungskanal kann Hydraulikfluid in den vorderen Zusatzkammerabschnitt nachgefüllt werden.

In einer weiteren bevorzugten Ausführungsform ist ein Abflusskanal zwischen Arbeitskammer und einem Hydraulikfluidtank vorgesehen, welcher ein Ventil aufweist, wobei vorzugsweise das Ventil ein druckbetätigtes Ventil ist, welches mit dem hinteren Zusatzkammerabschnitt derart in Verbindung steht, dass wenn der Druck im hinteren Zusatzkammerabschnitt über einen vorbestimmten Wert steigt, sich das druckbetätigte Ventil öffnet.

Weitere Vorteile, Merkmale und Anwendungsmöglichkeiten der vorliegenden Erfindung werden deutlich anhand der folgenden Beschreibung von verschiedenen Ausführungsformen und den zugehörigen Figuren. Es zeigen:
- Figuren 1a bis 1e: Querschnittsansichten einer ersten Ausführungsform in verschiedenen Positionen,
- Figuren 2a bis 2e: Querschnittsansichten einer zweiten Ausführungsform mit verschiedenen Arbeitskolbenpositionen,
- Figuren 3a bis 3e: Querschnittsansichten einer dritten Ausführungsform mit verschiedenen Kolbenpositionen,
- Figuren 4a bis 4e: Schnittansichten einer vierten Ausführungsform mit verschiedenen Kolbenpositionen.

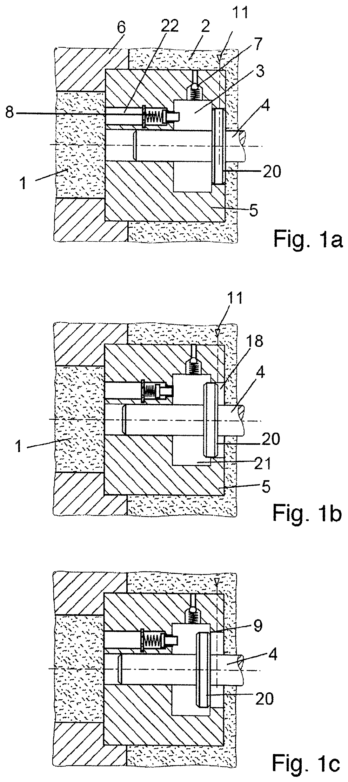

In den Figuren 1a bis 1e sind Schnittansichten einer ersten Ausführungsform der Erfindung gezeigt, wobei jeweils unterschiedliche Positionen des Kolbens dargestellt sind.

Bei dieser Ausführungsform hat die Vorrichtung eine feste Hublänge, d.h. der Kolben wird zwischen zwei festen Extremlagen hin- und herbewegt.

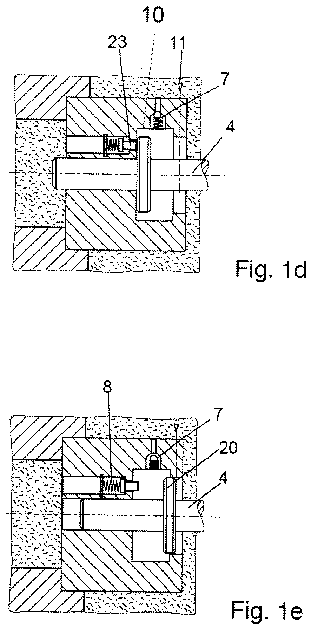

In Figur 1a ist eine Fördereinheit 6 zu erkennen mit einer Arbeitskammer 1. In der Fördereinheit 6 ist eine Buchse 5 eingebracht, in der ein Kolben 4 beweglich geführt ist. Der Kolben 4 wird angetrieben, so dass er sich von der in Figur 1a gezeigten rechten Extremposition bis zu der in Figur 1d gezeigten linken Extremposition bewegen kann.

Der hintere Extrempunkt oder Totpunkt ist mit der Bezugszahl 11 bezeichnet, während der vordere oder linke Extrempunkt mit der Bezugszahl 10 bezeichnet ist. Durch die Bewegung des Arbeitskolbens 4 übt die Kolbenstirnfläche eine Kraft auf das Hydraulikfluid im Arbeitsraum aus.

Insbesondere dann, wenn die erfindungsgemäße Vorrichtung zum Antrieb einer Dosiermembranpumpe verwendet wird, ist der Arbeitsraum jedoch mit elastischen Elementen, wie zum Beispiel der Membran, verbunden, so dass sich der Druck im Arbeitsraum 1 nicht abrupt aufbaut, sondern es zunächst zu einer Verdichtung der elastischen Elemente kommt. Um zu einer Druckerhöhung in der Arbeitskammer 1 zu gelangen, muss daher eine nicht unerhebliche Menge an Hydraulikfluid in Richtung der Membran transportiert werden. Zu diesem Zweck ist der Arbeitskolben 4 mit einem Hilfskolben 20 ausgestattet, dessen Außendurchmesser deutlich größer als der Außendurchmesser des Arbeitskolbens 4 ist. Der Hilfskolben 20 begrenzt in Figur 1a eine Zusatzkammer 3 in der Buchse 5. Die Zusatzkammer 3 ist über ein Rückschlagventil 7 mit dem Vorratstank 2 verbunden. Arbeitskolben 4 und Hilfskolben 20 sind in der gezeigten Ausführungsform als Stufenkolben 4,20 ausgeführt. Zudem ist ein Hilfskanal 22 vorgesehen, der mit einem entsperrbaren Rückschlagventil 8 ausgestattet ist und die Zusatzkammer 3 mit der Arbeitskammer 1 verbindet. In der in Figur 1a gezeigten Position befindet sich der Kolben 4 in seiner rechten Extremlage 11. In dieser Position umschließt der Hilfskolben 20 und die Buchse 5 die Zusatzkammer 3. Die Rückschlagventile 7 und 8 sind geschlossen. In dieser Situation ist der Druck in der Arbeitskammer 1 und dem Tank 2 in etwa gleich. Die Fördereinheit 6, die Buchse 5 und der Kolben 4 bilden die Arbeitskammer 1.

Beginnt nun der Druckhub, so bewegt sich der Stufenkolben 4, 20 in Richtung der vorderen Totpunktlage 10. Zu Beginn dieser Bewegung verursachen sowohl die stirnseitige Fläche des Arbeitskolbens 4 als auch die ringförmige Arbeitsfläche des Hilfskolbens 20 einen Druckanstieg im Hydraulikfluid sowohl der Arbeits- als auch der Zusatzkammer. Aufgrund des geringen Volumens der Zusatzkammer und geringere Elastizitäten in der Zusatzkammer ist der Druckanstieg im vorderen Zusatzkammerabschnitt 21 deutlich stärker ausgeprägt als in der Arbeitskammer 1, so dass das Rückschlagventil 8 öffnet und Hydraulikfluid aus der Zusatzkammer 3 in die Arbeitskammer 1 strömen kann.

Diese Situation ist in Figur 1b dargestellt.

Wird nun der Stufenkolben 4 weiter in Richtung des linken Extremwertes bewegt, so gelangt man zu der in Figur 1c dargestellten Situation, in der der Hilfskolben 20 die Zusatzkammer 3 nicht mehr umschließt, sondern sich ein Spalt 9 zwischen dem Hilfskolben 20 und dem Hilfshohlzylinder, der den Hilfskolben umgibt, bildet.

Durch den Spalt 9 sind somit der vordere Zusatzkammerabschnitt 21 und der hintere Zusatzkammerabschnitt 18 miteinander verbunden.

Da der Hilfskolben 20 beidseitig eine gleichgroße Arbeitsfläche aufweist, kann nun in der Zusatzkammer 3 kein Druck mehr aufgebaut werden. Stattdessen findet ein Druckausgleich zwischen vorderem und hinterem Zusatzkammerabschnitt statt. Da der hintere Zusatzkammerabschnitt zudem mit dem Hydraulikfluidtank 2 verbunden ist, entspricht der Druck in der Zusatmkammer 3 dem Druck im Tank 2. In der Folge schließt sich das Rückschlagventil 8 und für den verbleibenden Druckhub ist nur noch der Arbeitskolben 4, d.h. der Abschnitt mit geringerem Außendurchmesser aktiv.

Sobald der Hilfskolben 20 die linke Totpunktlage erreicht, betätigt dieser die Entsperrvorrichtung 23 des Rückschlagventiles 8, sodass überschüssiges Hydraulikfluid aus der Arbeitskammer in die Zusatzkammer 3 zurückströmen kann. Diese Situation ist in Figur 1d dargestellt.

Da die Rückseite des Hilfskolbens 20 mit dem Hydraulikfluidtank 2 verbunden ist kommt es somit zu einem Druckausgleich zwischen Arbeitskammer 1 und Hydraulikfluidtank 2.

Im Anschluss erfolgt die Saugbewegung des Kolbens 4. Sobald die in Figur 1e gezeigte Position erreicht ist, fällt der Druck in der Zusatzkammer 3 ab, das Rückschlagventil 8 schließt und das Rückschlagventil 7 öffnet sich, sodass auch in dieser Position ein Druckausgleich zwischen Hydraulikfluidtank 2 und Zusatzkammer 3 erfolgt. Dieser Vorgang wiederholt sich dann wieder beginnend mit der Situation die in Figur 1a gezeigt ist.

Die gezeigte Ausführungsform setzt zwei feste Extremlagen und damit eine feste Hublänge voraus.

Dies ist jedoch nicht immer gewünscht.

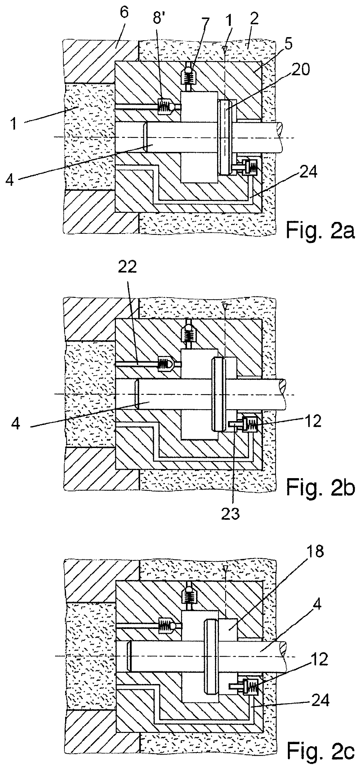

In den Figuren 2a bis 2e ist daher eine alternative Ausführungsform gezeigt, in der die Hublänge einstellbar ist. In dem gezeigten Beispiel hat der Kolben zwar eine hintere, feste Totpunktlage, die vordere Totpunktlage ist jedoch nicht festgelegt. In der in den Figuren 1a bis 1e gezeigten Ausführungsform war die vordere Totpunktlage jedoch vorgegeben, da der Kolben das entsprechende Rückschlagventil 8 entsperren musste.

In den Figuren 2a bis 2e sind ebenfalls Schnittansichten mit unterschiedlichen Kolbenpositionen dargestellt. Soweit möglich wurden gleiche Bezugszahlen für die gleichen Elemente verwendet.

In Figur 2a ist der Beginn des Druckhubes dargestellt. Der Hilfskolben 20, d.h. der Abschnitt des Stufenkolbens mit größerem Außendurchmesser befindet sich in seiner hinteren Totpunktlage. Die Zusatzkammer 3 wird von der Buchse 5 und dem Hilfskolben 20 umschlossen. Wird nun der Kolben in Druckrichtung, d.h. von rechts nach links in den Figuren bewegt, so übt der Arbeitskolben, d.h. der Abschnitt des Stufenkolbens 4 mit geringerem Außendurchmesser eine Kraft auf das Hydraulikfluid in der Arbeitskammer 1 aus, während der Hilfskolben 20 eine Kraft auf das Hydraulikfluid in der Zusatzkammer 3 ausübt. Der Druck in der Zusatzkammer 3 steigt schneller an als der Druck in der Arbeitskammer 1, sodass das Rückschlagventil 8' sich öffnet, wie in Figur 2b gezeigt ist und zusätzliches Hydraulikfluid von der Zusatzkammer 3 in die Arbeitskammer 1 gedrückt wird.

Bewegt sich der Stufenkolben 4 weiter nach links, so tritt die in Figur 2c gezeigte Situation auf, in der sich der Spalt 9 öffnet und ein Druckausgleich zwischen vorderem Zusatzkammerabschnitt 21 und hinterem Zusatzkammerabschnitt 18 erfolgt, sodass der Druck in der Arbeitskammer 1 größer ist als in der Zusatzkammer 3 und das Rückschlagventil 8' sich schließt. Da bei dieser Ausführungsform der Kolben keine feste linke Totpunktlage hat, ist nicht absehbar, wie weit sich der Kolben nach links bewegt. Daher weist bei dieser Ausführungsform das Rückschlagventil 8' auch keine Entsperrvorrichtung auf, da nicht gewährleistet wäre, dass der Hilfskolben 20 diese tatsächlich betätigen kann.

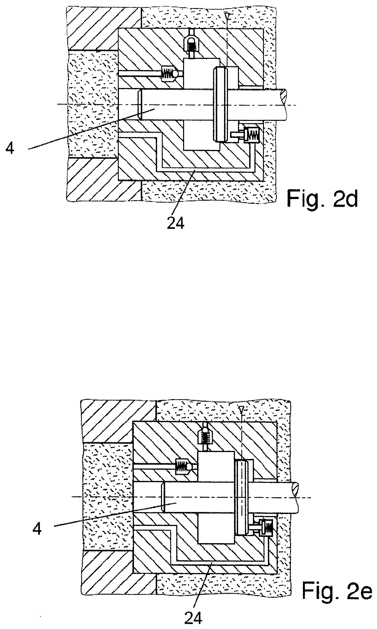

Der Stufenkolben 4 bewegt sich im Saughub wieder nach rechts, ohne dass der Kolben in die Nähe des Rückschlagventils 8' gekommen ist und es daher auch zunächst zu keinem Druckausgleich zwischen der Arbeitskammer 1 und dem Hydraulikfluidtank 2 kommt. Sobald die in Fig. 2 d gezeigte Position erreicht ist, wird der Spalt 9 geschlossen und der Druck in der Zusatzkammer 3 fällt ab, sodass das Rückschlagventil 7 sich öffnet und ein Druckausgleich zwischen Hydraulikfluidtank 2 und Zusatzkammer 3 stattfindet. Allerdings befindet sich in dieser Situation das durch den Hilfskolben 20 zusätzlich eingebrachte Hydraulikfluid noch in der Arbeitskammer 1.

Schließlich gelangt, wie in Figur 2e dargestellt ist, der Stufenkolben 4, 20 wieder in seine rechte Totpunktlage. Im Unterschied zu den in Figuren 1a bis 1e gezeigten Ausführungsform ist hier ein weiterer Verbindungskanal gezeigt, der die Arbeitskammer 1 über ein entsperrbares Rückschlagventil 12 mit der Rückseite des Hilfskolbens 20 und damit mit dem Hydraulikfluidtank 2 verbindet. In der in Figur 2e gezeigten Position wird das Rückschlagventil 12 entsperrt, sodass in dieser Situation das durch den Hilfskolben 20 zusätzlich eingebrachte Hydraulikfluid aus der Arbeitskammer 1 in den Hydraulikfluidtank 2 entweichen kann.

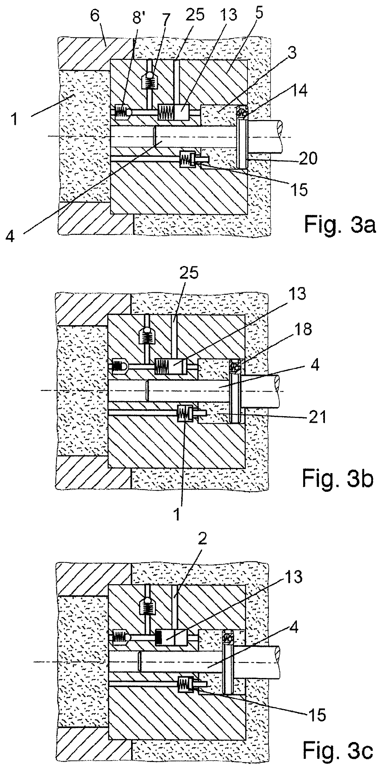

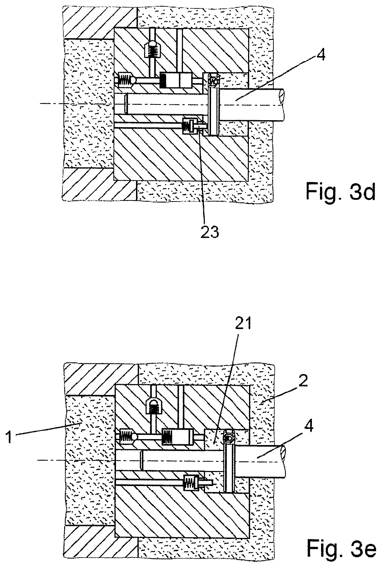

In den Figuren 3a bis 3e ist eine weitere Ausführungsform der Erfindung gezeigt, wobei hier wieder die Hublänge einstellbar ist, jedoch statt einer hinteren festen Totpunktlage eine vordere feste Totpunktlage besteht.

Auch hier wurden wieder soweit möglich die gleichen Bezugszahlen für gleiche Bauelemente verwendet.

Ausgangspunkt der folgenden Beschreibung ist der Beginn des Druckhubes, wie er in Figur 3a dargestellt ist. Der Verdrängerkolben befindet sich hier in seiner hinteren Totpunktlage. Der Stufenkolben 4,20 und die Buchse 5 umschließen die Zusatzkammer 3. Die Rückschlagventile 7 und 8' sind geschlossen. Bei dieser Ausführungsform sind zwei weitere Rückschlagventile 14, 15 vorhanden. Das Rückschlagventil 14 ist innerhalb des Hilfskolbens 20 angeordnet und erlaubt eine Strömung des Hydraulikfluids lediglich von der dem hinteren Zusatzkammerabschnitt 18 in den vorderen Zusatzkammerabschnitt 21. Das Rückschlagventil 15 ist ein entsperrbares Rückschlagventil, dass eine Hydraulikfluidströmung von dem vorderen Zusatzkammerabschnitt 21 in die Arbeitskammer 1 erlaubt. Das Rückschlagventiel 15 ist derart federbelastet, dass es im Normalbetrieb nicht öffnet, da der dafür notwendige Druckunsterschied zwischen Zusatzkammer 3 und Arbeitskammer 1 nicht erreicht wird. Es wird daher nur im Fehlerfall oder wenn es von dem Hilfskolben 20 entsperrt wird, geöffnet.

In der in Figur 3a gezeigten Position sind auch die Rückschlagventile 14 und 15 geschlossen. In dieser Ausführungsform ist zusätzlich ein volumetrisches Ventil 13 gezeigt, das im gezeigten Beispiel einen federbelasteten Kolben aufweist.

Bewegt sich nun der Stufenkolben 4,20 nach links, so steigt der Druck in der Arbeitskammer 1 und in der Zusatzkammer 3 an. Da das Zusatzkammervolumen geringer ist als das Volumen der Arbeitskammer steigt der Druck in der Zusatzkammer 3 deutlich schneller an als in der Arbeitskammer 1. Dies führt zu einer Bewegung des Kolbens des volumetrischen Ventils 13, sodass sich der Druck des Hydraulikfluids in dem Kanal zwischen dem volumetrischen Ventil 13 und der beiden Rückschlagventile 7 und 8' erhöht. Daher wird auch das Rückschlagventil 8' geöffnet und Hydraulikfluid wird aus dem Kanal in die Arbeitskammer 1 transportiert. Das aus diesem Kanal in die Arbeitskammer 1 strömende Hydraulikfluid beschleunigt den Druckaufbau in der Arbeitskammer 1. Diese Situation ist in Figur 3b gezeigt.

Bewegt sich der Stufenkolben 4 weiter in Richtung seiner linken Endpunktlage, so erreicht irgendwann der Kolben des volumetrischen Ventils 13 die in Figur 3c gezeigte Position mit der Folge, dass der Druck in der Zusatzkammer 3 über den Ablasskanal 25, der das volumetrische Ventil 13 mit dem Tank 2 verbindet, entweichen kann. In diesem Moment wird eine weitere Förderung von Hydraulikfluid über das Rückschlagventil 8' in die Arbeitskammer 1 gestoppt.

Bei der weiteren Bewegung des Arbeitskolbens 4 in Richtung der linken Totpunktlage sorgt lediglich die Stirnfläche des Arbeitskolben 4 für einen weiteren Druckanstieg in der Arbeitskammer 1, bis schließlich die in Figur 3d gezeigte linke Totlage erreicht ist. In dieser Position entsperrt der Hilfskolben 20 das entsperrbare Ventil 15, wodurch die Arbeitskammer 1 mit der Zusatzkammer 3 und über das volumetrische Ventil 13 mit dem Vorratstank 2 verbunden wird und es zu einem Druckausgleich kommt. Im nachfolgenden Saughub bewegt sich der Stufenkolben 4 wieder in Richtung seiner rechten Totpunktlage. Das Rückschlagventil 15 wird dann wieder geschlossen und der Kolben des volumetrischen Ventils 13 bewegt sich in seiner Ausgangsposition zurück mit der Folge, dass das Rückschlagventil 7 öffnet und den Verbindungskanal zwischen volumetrischem Ventil 13, Rückschlagventil 8' und Rückschlagventil 7 wieder mit Hydraulikfluid befüllt. Des Weiteren wird aufgrund des Druckunterschiedes zwischen dem hinteren Zusatzkammerabschnitt und dem vorderen Zusatzkammerabschnitt 21 das Rückschlagventil 14 geöffnet, sodass sichergestellt ist, dass sich zwischen den beiden Zusatzkammerabschnitten der Druck ausgleicht.

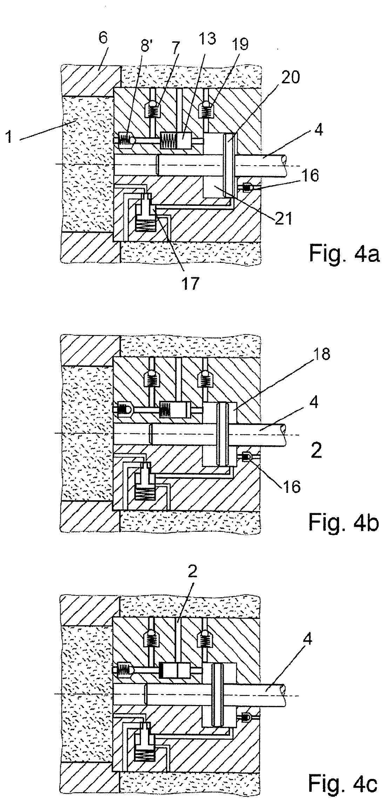

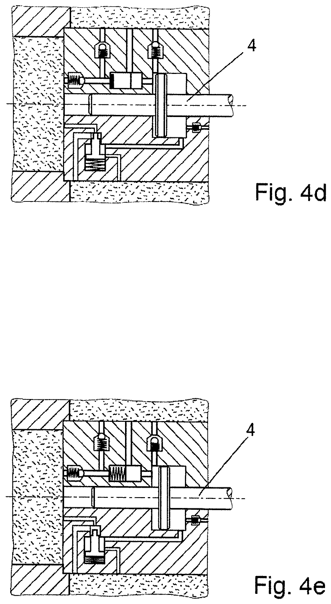

Schließlich ist in den Figuren 4a bis 4e eine vierte Ausführungsform der Erfindung dargestellt, bei der die Hublänge einstellbar ist und weder eine vordere noch eine hintere feste Totpunktlage besteht. Bei dieser Ausführungsform kann der Stufenkolben 4 beliebig bewegt werden. In Figur 4a ist wieder der Beginn des Druckhubes dargestellt. Wieder bilden der Hilfskolben 20 und die Buchse 5 die Zusatzkammer 3 bzw. den vorderen Zusatzkammerabschnitt. In dieser Ausführungsform ist der hintere Zusatzkammerabschnitt 18 nicht mit dem Hydraulikfluidtank 2 verbunden. In der in Figur 4a gezeigten Position sind die Rückschlagventile 7 und 8' sowie das Zweiwegeventil 17 geschlossen. Das Rückschlagventil 16, das Zweiwegeventil 17 und das volumetrische Ventil 13 sind ebenfalls geschlossen. Der Druck in der Arbeitskammer 1 und im Tank 2 ist gleich. Die Fördereinheit 6, die Buchse 5 und der Stufenkolben 4 bilden die Arbeitskammer 1.

Der Stufenkolben 4 bewegt sich nun in Richtung einer vorderen Endlage, wie in Figur 4b dargestellt ist. Zu Beginn der Bewegung wird sich der Druck sowohl in der Arbeitskammer 1 als auch im vorderen Zusatzkammerabschnitt 21 erhöhen. Aufgrund des geringeren Volumens in der Zusatzkammer steigt der Druck in der Zusatzkammer 3 deutlich schneller an als in der Arbeitskammer 1. Dies hat zur Folge, dass sich der Kolben des volumetrischen Ventils 13 in Richtung Arbeitsraum 1 bewegt, sodass sich das Rückschlagventil 8' öffnet. Dadurch wird Hydraulikfluid über das Rückschlagventil 8' in die Arbeitskammer 1 befördert, was zu einem zusätzlichen Druckanstieg in der Arbeitskammer 1 führt. In dieser Position sinkt der Druck im hinteren Zusatzkammerabschnitt 18 ab, aufgrund des Rückschlagventils 16, das den hinteren Zusatzkammerabschnitt 18 mit dem Tank 2 verbindet, wird es jedoch zu einem Druckausgleich und damit zu einem Nachfüllen von Hydraulikfluid im hinteren Zusatzkammerabschnitt 18 kommen.

Der Kolben bewegt sich dann weiter in Richtung seiner vorderen Endlage sodass der Kolben des volumetrischen Ventils 13 seine linke Endlage erreicht und die Ablassbohrung zum Tank 2 öffnet. In dem vorderen Zusatzkammerabschnitt wird daraufhin kein Druck mehr aufgebaut. Durch den weiteren Druckaufbau aufgrund des Arbeitskolbens steigt der Druck in der Arbeitskammer 1 jedoch weiter an. Daher schließt das Rückschlagventil 8.

Diese Situation ist in Figur 4c gezeigt.

Zu Beginn des Saughubes bewegt sich der Kolben des volumetrischen Ventils 13 nach rechts zurück in Richtung der Zusatzkammer 3. Durch das Vergrößern des Volumens zwischen den beiden Rückschlagventilen 7 und 8' und dem Kolben des volumetrischen Ventils entsteht ein Unterdruck, sodass sich das Rückschlagventil 7 öffnet und Öl aus dem Tank 2 über das Rückschlagventil 7 in die Bohrungen strömt. Darüber hinaus erhöht sich der Druck im hinteren Hilfskammerabschnitt 18. Dies wiederum hat zur Folge, dass das Zweiwegeventil 17 sich öffnet, sodass über einen entsprechenden Ablasskanal eine Verbindung zwischen der Arbeitskammer 1 und dem Vorratstank 2 freigegeben wird. Somit kann das durch den Hilfskolben 20 bzw. durch das volumetrische Ventil 13 zusätzlich in die Arbeitskammer 1 eingetragene Hydraulikfluid in den Tank 2 entweichen.

Die Rückschlagventile 7, 8' sind geschlossen und der Kolben des volumetrischen Ventils 13 befindet sich in der rechten Endlage, sodass der Unterdruck in der Zusatzkammer 3 das Rückschlagventil 19 öffnet und Hydraulikfluid vom Tank 2 über das Rückschlagventil 19 in die Zusatzkammer 3 strömen kann.

### Bezugszeichen

- 1: Arbeitskammer
- 2: Hydraulikfluidtank
- 3: Zusatzkammer
- 4: Arbeitskolben
- 5: Buchse
- 6: Fördereinheit
- 7: Rückschlagventil
- 8: Rückschlagventil
- 8': Rückschlagventil
- 9: Spalt
- 10: Totpunktlage
- 11: Totpunktlage
- 12: Rückschlagventil
- 13: volumetrische Ventil
- 14: Rückschlagventil
- 15: entsperrbares Rückschlagventil
- 16: Rückschlagventil
- 17: Zweiwegeventil
- 18: hinterer Zusatzkammerabschnitt
- 19: Rückschlagventil
- 20: Hilfskolben
- 21: vorderer Zusatzkammerabschnitt
- 22: Hilfskanal
- 23: Entsperrvorrichtung
- 24: Verbindungskanal
- 25: Ablaßkanal

## Patentansprüche

1. Vorrichtung zum Erzeugen eines pulsierenden Hydraulikfluiddruckes in einer mit Hydraulikfluid gefüllten Arbeitskammer (1) mit einem in einem Arbeitshohlzylinder beweglich geführten, antreibbaren Arbeitskolben (4), wobei eine mit dem Arbeitskolben (4) in Fluidkommunikation stehende Arbeitskammer (1) vorgesehen ist, so dass durch eine Bewegung des Arbeitskolbens (4) innerhalb des Arbeitshohlzylinders ein pulsierender Hydraulikfluiddruck in der Arbeitskammer (4) erzeugt werden kann, **dadurch gekennzeichnet, dass** ein Hilfskolben (20) in einem Hilfshohlzylinder beweglich geführt ist und mit einer Zusatzkammer (3) in Fluidkommunikation steht, wobei ein verschließbarer Hilfskanal (22) vorgesehen ist, welcher die Zusatzkammer (3) und die Arbeitskammer (1) verbindet, wobei Hilfskolben (20) und Hilfshohlzylinder derart ausgebildet und angeordnet sind, dass durch Bewegen des Hilfskolbens (20) innerhalb des Hilfshohlzylinders ein in der Zusatzkammer (3) angeordnetes Hydraulikfluid zumindest zum Teil aus der Zusatzkammer (3) in den Hilfskanal (22) und von dem Hilfskanal (22) in die Arbeitskammer (1) gedrückt werden kann, wobei der Hilfskolben (20) die Zusatzkammer (3) in einen vorderen und einen hinteren Zusatzkammerabschnitt (21, 18) unterteilt, wobei der Hilfskolben (20) derart bewegt werden kann, dass Hydraulikfluid von dem vorderen Zusatzkammerabschnitt (21) in den Hilfskanal (22) und von dem Hilfskanal (22) in die Arbeitskammer (1) gedrückt werden kann, und der Hilfskolben (20) und der Hilfshohlzylinder derart ausgebildet sind, dass der Hilfskolben (20) während der Bewegung einen ersten und einen zweiten Hubabschnitt durchläuft, wobei nur in dem ersten Hubabschnitt Hydraulikfluid von der Zusatzkammer (3) in den Hilfskanal (22) und von dem Hilfskanal (22) in die Arbeitskammer (1) übertragen werden kann, sodass zu Beginn eines Druckhubes zusätzliches Hydraulikfluid von der Zusatzkammer (3) in die Arbeitskammer (1) gebracht wird.

2. Vorrichtung nach Anspruch 1, **dadurch gekennzeichnet, dass** ein Stufenkolben vorgesehen ist, welcher sowohl den Arbeitskolben (4) als auch den Hilfskolben (20) umfasst, wobei der Stufenkolben innerhalb eines Stufenhohlzylinders beweglich angeordnet ist, welcher sowohl den Arbeitshohlzylinder als auch den Hilfshohlzylinder umfasst.

3. Vorrichtung nach Anspruch 1 oder 2, **dadurch gekennzeichnet, dass** die wirksame Arbeitsfläche des Hilfskolbens (20), die mit der Hilfskammer (22) in Fluidkommunikation steht, größer, vorzugsweise mehr als 100% größer als die wirksame Arbeitsfläche des Arbeitskolbens (4), die mit der Arbeitskammer (1) in Fluidkommunikation steht, ist.

4. Vorrichtung nach einem der Ansprüche 1 bis 3, **dadurch gekennzeichnet, dass** der effektive Hub des Hilfskolbens (20) kleiner, vorzugsweise um mehr als 50% kleiner als der effektive Hub des Arbeitskolbens (4) ist.

5. Vorrichtung nach einem der Ansprüche 1 bis 4, **dadurch gekennzeichnet, dass** im zweiten Hubabschnitt der vordere und der hintere Zusatzkammerabschnitt (21, 18) verbunden sind.

6. Vorrichtung nach einem der Ansprüche 1 bis 4, **dadurch gekennzeichnet, dass** die Zusatzkammer (3) über ein volumetrisches Dosierventil (13) im Hilfskanal (22) mit der Arbeitskammer (1) verbunden ist, so dass das von dem Hilfskolben (20) aus der Zusatzkammer (3) gedrückte Hydraulikfluid das volumetrische Dosierventil (13) betätigt, wobei vorzugsweise das Dosiervolumen des volumetrischen Ventils (1) dem Produkt aus dem effektiven Hub des Hilfskolben (20) und der effektiven Arbeitsfläche des Hilfskolben (20) entspricht.

7. Vorrichtung nach einem der Ansprüche 1 bis 6, **dadurch gekennzeichnet, dass** ein Rückströmkanal (24)zwischen Arbeitskammer und Zusatzkammer vorgesehen ist, in dem ein Rückschlagventil angeordnet ist, welches eine Fluidströmung nur in Richtung von der Zusatzkammer (3) in den Rückströmkanal (24) und/oder von dem Rückströmkanal in die Arbeitskammer (1) zulässt.

8. Vorrichtung nach Anspruch 7, **dadurch gekennzeichnet, dass** eine Betätigungsvorrichtung zum Entsperren des Rückschlagventils vorgesehen ist, welche von dem Hilfskolben (20) betätigt werden kann, wobei vorzugsweise der Rückströmkanal von dem Hilfskanal (22) gebildet wird.

9. Vorrichtung nach einem der Ansprüche 1 bis 8, **dadurch gekennzeichnet, dass** ein verschließbarer Verbindungskanal (24) zwischen vorderem Zusatzkammerabschnitt (21) und entweder einem Hydraulikfluidtank oder dem hinteren Zusatzkammerabschnitt (18) vorhanden ist, wobei der Verbindungkanal (24) vorzugsweise über ein Rückschlagventil verschlossen ist, welches eine Fluidströmung nur in Richtung von dem Tank oder von dem hinteren Zusatzkammerabschnitt (18) in den vorderen Zusatzkammerabschnitt (21) zulässt.

10. Vorrichtung nach einem der Ansprüche 1 bis 9, **dadurch gekennzeichnet, dass** ein Abflusskanal (25) zwischen Arbeitskammer (1) und einem Hydraulikfluidtank vorgesehen ist, welcher ein Ventil aufweist, wobei vorzugsweise das Ventil ein druckbetätigtes Ventil ist, welches mit dem hinteren Zusatzkammerabschnitt (18) in Verbindung derart in Verbindung steht, dass wenn der Druck im hinteren Zusatzkammerabschnitt (18) über einen vorbestimmten Wert steigt, sich das druckbetätigte Ventil öffnet.

11. Membranpumpe mit einer Kavität und einer Membran, welche die Kavität in eine Arbeitskammer (1) und eine Dosierkammer teilt, **dadurch gekennzeichnet, dass** eine Vorrichtung nach einem der Ansprüche 1 bis 10 vorgesehen ist.

## Claims

1. Device for generating a pulsating hydraulic fluid pressure in a working chamber (1) filled with hydraulic fluid with a drivable working piston (4) movably guided in a hollow working cylinder, wherein a working chamber (1) that is in fluid communication with the working piston (4) is provided such that, by means of a movement of the working piston (4) within the hollow working cylinder, a pulsating hydraulic fluid pressure can be generated in the working chamber (4), **characterized in that** an auxiliary piston (20) is movably guided in a hollow auxiliary cylinder and is in fluid communication with an additional chamber (3), wherein a closeable auxiliary channel (22) is provided, which connects the additional chamber (3) and the working chamber (1), wherein the auxiliary piston (20) and hollow auxiliary cylinder are formed and arranged in such a way that, by moving the auxiliary piston (20) within the hollow auxiliary cylinder, a hydraulic fluid arranged in the additional chamber (3) can at least partly be forced out of the additional chamber (3) into the auxiliary channel (22) and from the auxiliary channel (22) into the working chamber (1), wherein the auxiliary piston (20) divides the additional chamber (3) into a front and a rear additional chamber section (21, 18), wherein the auxiliary piston (20) can be moved in such a way that hydraulic fluid can be forced from the front additional chamber section (21) into the auxiliary channel (22) and from the auxiliary channel (22) into the working chamber (1), and the auxiliary piston (20) and the hollow auxiliary cylinder are formed in such a way that, during the movement, the auxiliary piston (20) passes through a first and a second stroke section, wherein hydraulic fluid can only be transferred from the additional chamber (3) into the auxiliary channel (22) and from the auxiliary channel (22) into the working chamber (1) in the first stroke section, with the result that additional hydraulic fluid is brought from the additional chamber (3) into the working chamber (1) at the start of a pressure stroke.

2. Device according to claim 1, **characterized in that** a differential piston is provided which comprises both the working piston (4) and the auxiliary piston (20), wherein the differential piston is movably arranged within a hollow differential cylinder which comprises both the hollow working cylinder and the hollow auxiliary cylinder.

3. Device according to claim 1 or 2, **characterized in that** the effective working surface area of the auxiliary piston (20) which is in fluid communication with the auxiliary chamber (22) is larger, preferably more than 100% larger, than the effective working surface area of the working piston (4) which is in fluid communication with the working chamber (1).

4. Device according to one of claims 1 to 3, **characterized in that** the effective stroke of the auxiliary piston (20) is smaller, preferably more than 50% smaller, than the effective stroke of the working piston (4).

5. Device according to one of claims 1 to 4, **characterized in that**, in the second stroke section, the front and the rear additional chamber sections (21, 18) are connected.

6. Device according to one of claims 1 to 4, **characterized in that** the additional chamber (3) is connected to the working chamber (1) via a volumetric metering valve (13) in the auxiliary channel (22), with the result that the hydraulic fluid forced out of the additional chamber (3) by the auxiliary piston (20) actuates the volumetric metering valve (13), wherein the metered volume of the volumetric valve (1) preferably corresponds to the product of the effective stroke of the auxiliary piston (20) and the effective working surface area of the auxiliary piston (20).

7. Device according to one of claims 1 to 6, **characterized in that**, between working chamber and additional chamber, a return flow channel (24) is provided in which is arranged a check valve, which allows a fluid flow only in the direction from the additional chamber (3) into the return flow channel (24) and/or from the return flow channel into the working chamber (1).

8. Device according to claim 7, **characterized in that** an actuating device is provided for releasing the check valve which can be actuated by the auxiliary piston (20), wherein the return flow channel is preferably formed by the auxiliary channel (22).

9. Device according to one of claims 1 to 8, **characterized in that** a closeable connecting channel (24) is present between the front additional chamber section (21) and either a hydraulic fluid tank or the rear additional chamber section (18), wherein the connecting channel (24) is preferably closed by a check valve, which allows a fluid flow only in the direction from the tank or from the rear additional chamber section (18) into the front additional chamber section (21).

10. Device according to one of claims 1 to 9, **characterized in that**, between working chamber (1) and a hydraulic fluid tank, a discharge channel (25) is provided which has a valve, wherein the valve is preferably a pressure-actuated valve, which is connected to the rear additional chamber section (18) in such a way that the pressure-actuated valve opens when the pressure in the rear additional chamber section (18) rises above a predetermined value.

11. Diaphragm pump with a cavity and a diaphragm, which divides the cavity into a working chamber (1) and a metering chamber, **characterized in that** a device according to one of claims 1 to 10 is provided.

## Revendications

1. Dispositif permettant de générer une pression de fluide hydraulique pulsatoire dans une chambre de travail (1) remplie de fluide hydraulique et comportant un piston de travail (4) pouvant être entrainé et guidé de manière mobile dans un cylindre de travail creux, dans lequel une chambre de travail (1) en communication fluidique avec le piston de travail (4) est prévue, de sorte qu'une pression de fluide hydraulique pulsatoire peut être générée dans la chambre de travail (4) par un déplacement du piston de travail (4) au sein du cylindre de travail creux, **caractérisé en ce qu'**un piston auxiliaire (20) est guidé de manière mobile dans un cylindre auxiliaire creux et est en communication fluidique avec une chambre supplémentaire (3), un canal auxiliaire (22) qui peut être fermé et qui relie la chambre supplémentaire (3) à la chambre de travail (1) étant prévu, le piston auxiliaire (20) et le cylindre auxiliaire creux étant conçus et agencés de telle manière qu'un fluide hydraulique se trouvant dans la chambre supplémentaire (3) peut être refoulé au moins en partie hors de la chambre supplémentaire (3) dans le canal auxiliaire (22) et depuis le canal auxiliaire (22) dans la chambre de travail (1) par le déplacement du piston auxiliaire (20) au sein du cylindre auxiliaire creux, le piston auxiliaire (20) divisant la chambre supplémentaire (3) en des sections de chambre supplémentaire avant et arrière (21, 18), le piston auxiliaire (20) pouvant être déplacé de telle manière que le fluide hydraulique peut être refoulé depuis la section de chambre supplémentaire avant (21) dans le canal auxiliaire (22) et depuis le canal auxiliaire (22) dans la chambre de travail (1), et le piston auxiliaire (20) et le cylindre auxiliaire creux étant conçus de telle manière que le piston auxiliaire (20) parcourt, pendant le déplacement, les première et deuxième sections de course, du fluide hydraulique ne pouvant être transféré depuis la chambre supplémentaire (3) dans le canal auxiliaire (22) et depuis le canal auxiliaire (22) dans la chambre de travail (1) que dans la première section de course, de sorte que du fluide hydraulique supplémentaire est amené depuis la chambre supplémentaire (3) dans la chambre de travail (1) au début d'une course en phase de refoulement.

2. Dispositif selon la revendication 1, **caractérisé en ce qu'**un piston différentiel comprenant à la fois le piston de travail (4) et le piston auxiliaire (20) est prévu, le piston différentiel étant agencé de manière mobile à l'intérieur d'un cylindre différentiel creux comprenant à la fois le cylindre de travail creux et le cylindre auxiliaire creux.

3. Dispositif selon la revendication 1 ou 2, **caractérisé en ce que** la surface de travail effective du piston auxiliaire (20) qui est en communication fluidique avec la chambre auxiliaire (22) est supérieure, de manière préférée supérieure de plus de 100 %, à la surface de travail effective du piston de travail (4) qui est en communication fluidique avec la chambre de travail (1).

4. Dispositif selon l'une des revendications 1 à 3, **caractérisé en ce que** la course effective du piston auxiliaire (20) est inférieure, de manière préférée inférieure de plus de 50 %, à la course effective du piston de travail (4).

5. Dispositif selon l'une des revendications 1 à 4, **caractérisé en ce que** les sections de chambre supplémentaire avant et arrière (21, 18) sont reliées au sein de la deuxième section de course.

6. Dispositif selon l'une des revendications 1 à 4, **caractérisé en ce que** la chambre supplémentaire (3) est reliée à la chambre de travail (1) par l'intermédiaire d'une valve de dosage volumétrique (13) située dans le canal auxiliaire (22), de sorte que le fluide hydraulique refoulé par le piston auxiliaire (20) hors de la chambre supplémentaire (3) actionne la valve de dosage volumétrique (13), le volume de dosage de la valve volumétrique (1) correspondant de manière préférée au produit de la course effective du piston auxiliaire (20) et de la surface de travail effective du piston auxiliaire (20).

7. Dispositif selon l'une des revendications 1 à 6, **caractérisé en ce qu'**est prévu entre la chambre de travail et la chambre supplémentaire un canal de retour (24) au sein duquel est agencé un clapet anti-retour qui n'autorise une circulation de fluide que dans un sens allant de la chambre supplémentaire (3) dans le canal de retour (24) et/ou allant du canal de retour dans la chambre de travail (1).

8. Dispositif selon la revendication 7, **caractérisé en ce qu'**est prévu un dispositif d'actionnement permettant d'ouvrir le clapet anti-retour et pouvant être actionné par le piston auxiliaire (20), le canal de retour étant de manière préférée formé par le canal auxiliaire (22).

9. Dispositif selon l'une des revendications 1 à 8, **caractérisé en ce qu'**un canal de liaison (24) pouvant être fermé est présent entre la section de chambre supplémentaire avant (21) et un réservoir de fluide hydraulique ou bien la section de chambre supplémentaire arrière (18), le canal de liaison (24) étant de manière préférée fermé par l'intermédiaire d'un clapet anti-retour qui n'autorise une circulation de fluide que dans un sens allant du réservoir ou de la section de chambre supplémentaire arrière (18) dans la section de chambre supplémentaire avant (21).

10. Dispositif selon l'une des revendications 1 à 9, **caractérisé en ce qu'**un canal de sortie (25) présentant un clapet est prévu entre la chambre de travail (1) et un réservoir de fluide hydraulique, le clapet étant de manière préférée un clapet actionné par la pression qui est relié à la section de chambre supplémentaire arrière (18) de telle manière que le clapet actionné par la pression s'ouvre lorsque la pression au sein de la section de chambre supplémentaire arrière (18) dépasse une valeur prédéterminée.

11. Pompe à membrane comportant une cavité et une membrane divisant la cavité en une chambre de travail (1) et une chambre de dosage, **caractérisée en ce qu'**un dispositif selon l'une des revendications 1 à 10 est prévu.
